# EUROPÄISCHE PATENTSCHRIFT

(11) **EP 1 857 223 B1**
(45) Veröffentlichungstag und Bekanntmachung des Hinweises auf die Patenterteilung: **30.09.2009**
(21) Anmeldenummer: 07009482.6
(22) Anmeldetag: 11.05.2007
(51) Int. Cl.: B23Q 16/00, B26B 7/00

(54) **Oszillationsantrieb mit einem Tiefenanschlag und Tiefenanschlag für einen Oszillationsantrieb**
Oscillation drive with a depth stop and depth stop for an oscillation drive
Actionnement par oscillation doté d'une butée de profondeur et butée de profondeur pour un actionnement par oscillation

(30) Priorität: 15.05.2006 DE 102006023888
(43) Veröffentlichungstag der Anmeldung: 21.11.2007
(73) Patentinhaber: C. & E. Fein GmbH, 73529 Schwäbisch Gmünd-Bargau (DE)
(72) Erfinder: Schumacher, Hermann, 72770 Reutlingen (DE)
(74) Vertreter: Gahlert, Stefan

(56) Entgegenhaltungen:
- DE-C1- 3 304 981
- DE-C1- 19 938 106
- US-A- 3 740 847

## Beschreibung

Die vorliegende Erfindung betrifft einen Oszillationsantrieb mit einer drehoszillierend angetriebenen Abtriebswelle zum Antrieb eines Werkzeugs, mit einem Tiefenanschlag zur Begrenzung einer Eindringtiefe des Werkzeugs, wobei der Tiefenanschlag ein Befestigungsteil aufweist, das am Oszillationsantrieb im Wesentlichen parallel zu einer Oszillationsebene des Oszillationsantriebs befestigt ist, und an dem Befestigungsteil ein Abstandshalter angeordnet ist, der relativ zum Befestigungsteil entlang einer Lagerungsachse verschiebbar ist, wobei der Abstandshalter in einer am Tiefenanschlag ausgebildeten Halteeinrichtung um die Lagerungsachse verdrehbar gehalten ist und wobei mindestens ein Abschnitt des Abstandshalters nicht rotationssymmetrisch zur Lagerungsachse ausgeführt ist.

Ein derartiger Oszillationsantrieb mit einem solchen Tiefenanschlag ist aus der US-A-3740847 bekannt. Es handelt sich hierbei um ein oszillierend angetriebenes Messer zum Schneiden von Fleisch das mit einem Tiefenanschlag versehen ist. Der Tiefenanschlag ist hierbei jedoch nicht für jeden Betrieb optimal einstellbar.

Ein weiterer Oszillationsantrieb ähnlicher Bauart ist aus der DE 199 38 106 C1 bekannt.

Unter einem Oszillationsantrieb soll ein Antrieb verstanden werden, dessen Abtriebswelle im Betrieb eine oszillierende Drehbewegung ausführt. Ein an der Abtriebswelle befestigtes Werkzeug kann so in vielfältiger Weise etwa zum Sägen, Schneiden oder Schleifen verwendet werden.

Handgeführte Oszillationsantriebe bieten eine große Flexibilität hinsichtlich ihrer möglichen Einsatzgebiete. Oszillationsantriebe erlauben ein sehr präzises Arbeiten, doch hängt das Arbeitsergebnis auch von der Fertigkeit des Benutzers im Umgang mit einem Oszillationsantrieb ab.

Zu den schwierigeren Aufgaben bei der Arbeit mit einem Oszillationsantrieb zählt das Einschneiden in Werkstücke bis zu einer bestimmten Tiefe. Dies kann beispielsweise erforderlich sein, um Ausnehmungen in ein Werkstück einzubringen, ohne es zu zertrennen, oder um andere Bereiche des Werkstücks nicht zu beschädigen.

Eine wertvolle Hilfe bietet hier der zuvor erwähnte Tiefenanschlag, der die Eindringtiefe des aufgesetzten Werkzeugs, in das Werkstück begrenzt. Solange der Tiefenanschlag das Werkstück nicht berührt, kann das Werkzeug tiefer in das Werkstück eindringen. Liegt der Tiefenanschlag aber am Werkstück an, so verhindert er ein tieferes Eindringen des Werkzeugs.

Der Oszillationsantrieb gemäß der DE 199 38 106 C1 weist einen Tiefenanschlag auf, bei dem an einer Stellhülse, die koaxial zur Abtriebswelle des Oszillationsantriebs angeordnet ist, ein im Wesentlichen scheibenförmiger Anschlag von annähernd ovaler Grundform angeordnet ist. Der Anschlag ist mit einem Langloch versehen.

Die Stellhülse weist ein Gewinde auf, in das eine Schraube eingedreht werden kann, die durch das Langloch des Anschlags geführt ist. Der Anschlag kann zunächst gewünscht positioniert und dann fixiert werden, indem er mittels der Schraube gegen die Stellhülse gedrückt wird.

Der genannte Oszillationsantrieb hat sich in der Praxis bewährt. Bei bestimmten Arbeitssituationen, beispielsweise in Bereichen, die auf engem Raum komplex geformt sind, kann das genaue Festlegen der Eindringtiefe aber erschwert sein.

Der Erfindung liegt die Aufgabe zugrunde, einen verbesserten Oszillationsantrieb zu schaffen, bei dem die Eindringtiefe des Werkzeugs mit kostengünstigen Mitteln besonders flexibel eingestellt werden kann.

Diese Aufgabe wird erfindungsgemäß mit einem Oszillationsantrieb der eingangs genannten Art gelöst, bei dem die Halteeinrichtung drehbar oder verschwenkbar zum Befestigungsteil gelagert ist.

Mittels des Befestigungsteils wird sichergestellt, dass der Tiefenanschlag sicher mit dem Oszillationsantrieb verbunden ist. Dabei wird das Befestigungsteil vorzugsweise in einer vorgegebenen Position relativ zum Oszillationsantrieb fixiert.

Abhängig von dem jeweiligen Arbeitseinsatz kann die gewünschte Eindringtiefe des Werkzeugs eingestellt werden. Dies geschieht, indem der Abstandshalter relativ zum Befestigungsteil verschoben und/oder verdreht wird und damit der Kontaktbereich des Abstandshalters in eine gewünschte Position relativ zum Werkzeug gebracht wird.

Da der Abstandshalter relativ zum Befestigungsteil verschiebbar und verdrehbar ist, kann die Eindringtiefe nicht nur bezogen auf ebene Flächen, sondern auch in Bezug auf schwierigere Ärbeitssituationen, beispielsweise beim Arbeiten in Ecken oder auf gewellten Flächen, gut eingestellt werden. Auch ist es möglich, die Halteeinrichtung und damit den Abstandshalter in verschiedenen Winkeln relativ zum Oszillationsantrieb zu positionieren. Auf diese Weise kann die Flexibilität des Tiefenanschlags hinsichtlich seiner Einstellmöglichkeiten nochmals gesteigert werden. Wenn die Peripherie des Befestigungsteils zudem kreis- oder teilkreisförmig ausgeführt ist, kann die Dreh- oder Verschwenkbarkeit der Halteeinrichtung mit einfachen Mitteln realisiert werden.

Aufgrund der Halteeinrichtung ist es nicht mehr erforderlich, den Abstandshalter beidseitig der Abtriebswelle zu führen. Vielmehr ist es ausreichend, den Abstandshalter an einer Seite der Abtriebswelle zu halten, wodurch sich konstruktive Vereinfachungen und dadurch ein weitere Flexibilität ergeben. Die Halteeinrichtung kann auch einstückig mit dem Befestigungsteil ausgeführt sein.

Es handelt sich dabei auch um eine kostengünstige Lösung, da die genannte Verstellbarkeit des Abstandshalters auch mit einfachen Mitteln erzielt werden kann.

In einer weiteren Ausgestaltung der Erfindung weist das Befestigungsteil eine zentrale Befestigungsöffnung mit einer Mittelachse auf, und eine Drehachse der Halteeinrichtung fällt mit der Mittelachse zusammen.

Die zentrale Öffnung ermöglicht es, den Tiefenanschlag so am Oszillationsantrieb anzuordnen, dass die Abtriebswelle durch die zentrale Öffnung des Befestigungsteils führt. Vereinfacht gesagt, liegt das Befestigungsteil dann gewissermaßen koaxial zur Abtriebswelle, das heißt, die Mittelachse der zentralen Öffnung und die Mittelachse der Abtriebswelle fallen zusammen.

Wenn eine Drehachse der Halteeinrichtung mit der Mittelachse der zentralen Öffnung zusammenfällt, so kann ein kreisförmiger oder teilkreisförmiger Rand der Halteeinrichtung an einem kreisförmigen oder teilkreisförmigen Rand des Befestigungsteils geführt werden. Dies bietet eine gute Verstellbarkeit der Halteeinrichtung und damit des Abstandshalters, die zudem einfach realisiert werden kann.

In einer weiteren Ausgestaltung der Erfindung weist die Halteeinrichtung ein Klemmmittel zur Fixierung des Abstandshalters in der Halteeinrichtung auf.

Ein solches Klemmmittel kann einerseits ein einfaches Verstellen des Abstandshalters und andererseits ein sicheres Fixieren des Abstandshalters für den Arbeitseinsatz ermöglichen. Zum Einstellen des Abstandshalters wird das Klemmmittel zunächst gelöst. Der Abstandshalter wird dann innerhalb der Halteeinrichtung so positioniert, wie es für den jeweiligen Arbeitseinsatz erforderlich ist. Nachdem die gewünschte Einstellung vorgenommen wurde, wird das Klemmmittel angezogen und damit der Abstandshalter in der Halteeinrichtung fixiert.

Wird nun während des Arbeitseinsatzes eine Kraft auf den Abstandshalter ausgeübt, beispielsweise weil die gewünschte Eindringtiefe erreicht ist und der Abstandshalter gegen das Werkstück drückt, so verhindert die Klemmung eine Verlagerung des Abstandshalters innerhalb der Halteeinrichtung.

Ein solches Klemmmittel lässt sich vorzugsweise mittels zweier Klemmbacken realisieren, die mittels einer Spannschraube aufeinander zu bewegt werden können und so den Abstandshalter festklemmen.

In einer weiteren Ausgestaltung der Erfindung ist der Abstandshalter in der Halteeinrichtung derart gehalten, dass der Abstandshalter in eine Nut am Befestigungsteil eingreift.

Grundsätzlich ist es vorteilhaft, wenn Befestigungsteil und Halteeinrichtung voneinander separiert werden können. Damit ist es möglich, die Halteeinrichtung mit dem Abstandshalter vom Oszillationsantrieb abzunehmen, ohne das Befestigungsteil vom Oszillationsantrieb entfernen zu müssen. Da das Befestigungsteil demnach am Oszillationsantrieb verbleiben kann, kann der Abstandshalter bei Bedarf schnell montiert oder demontiert werden.

Wenn der Abstandshalter in eine Nut am Befestigungsteil eingreift, kann die Montage oder Demontage besonders leicht durchgeführt werden. Der Abstandshalter hat dann auch die Funktion, ein Separieren von Befestigungsteil und Halteeinrichtung zu blockieren. Zur Montage wird dabei lediglich die Halteeinrichtung auf das bereits am Oszillationsantrieb montierte Befestigungsteil gesetzt. Der Abstandshalter wird dann in die Halteeinrichtung eingeschoben, wobei er gleichzeitig in eine Nut am Befestigungsteil eingreift. Die Halteeinrichtung kann sich nun nicht mehr vom Befestigungsteil lösen.

Bei der Demontage wird in umgekehrter Reihenfolge vorgegangen. Zunächst wird der Abstandshalter in der Halteeinrichtung so verlagert, dass er nicht mehr in die Nut am Befestigungsteil eingreift, insbesondere kann der Abstandshalter ganz aus der Halteeinrichtung herausgezogen werden. Dadurch wird die Halteeinrichtung freigegeben und kann vom Befestigungsteil abgezogen werden.

In einer weiteren Ausgestaltung der Erfindung ist in der Nut mindestens ein elastisches Element angeordnet.

Bei dieser Ausführungsform liegt der Abstandshalter im eingesetzten Zustand an dem elastischen Element an, insbesondere übt er einen Druck auf das elastische Element aus. Das elastische Element wirkt damit als mechanischer Widerstand einer Verlagerung des Abstandshalters entgegen.

Sofern der Abstandshalter in der Halteeinrichtung während des Arbeitseinsatzes fixiert ist - dies wird regelmäßig der Fall sein, damit der Abstandshalter die eingestellte Position nicht verändert -, so wirkt das elastische Element dann auch einem Verdrehen der Halteeinrichtung entgegen.

Eine Verdrehsicherung kann auch mit einem gezahnten Kranz erreicht werden. Dabei greifen im fixierten Zustand Zähne am Befestigungsteil in Zähne an der Halteeinrichtung. Wird der Abstandshalter aus der Nut herausgezogen, kann die Halteeinrichtung abgenommen werden und in einer anderen Position wieder auf das Befestigungsteil gesetzt werden.

In einer weiteren Ausgestaltung der Erfindung legt eine Auflagefläche am Oszillationsantrieb, an der das Befestigungsteil bei Befestigung am Oszillationsantrieb anliegt, eine Montageebene fest und ist der Abstandshalter zwischen der Oszillationsebene und der Montageebene angeordnet.

Dadurch kann der Oszillationsantrieb insgesamt platzsparend gebaut werden.

In einer weiteren Ausgestaltung der Erfindung ist der Abstandshalter als Stab mit einem geradlinigen Abschnitt und vorzugsweise mit einem gekrümmten Abschnitt ausgeführt.

Der Abstandshalter hat dann eine im Wesentlichen längliche Erstreckung, wobei er dabei zusätzlich eine oder mehrere Krümmungen aufweisen kann. Der Stab hat vorzugsweise einen geringen Durchmesser, um so ein Positionieren des Kontaktbereichs des Abstandshalters auch in engen Zwischenräumen zu ermöglichen. Wenn der Stab einen kreisförmigen Querschnitt hat, ist es besonders einfach, ihn verdrehbar in der Halteeinrichtung zu führen.

In einer weiteren Ausgestaltung der Erfindung ist das Befestigungsteil mittels einer Schraub- und/oder Klemmverbindung am Oszillationsantrieb befestigt.

Dies ist vorteilhaft, da das Befestigungsteil und damit der gesamte Tiefenanschlag auf einfache Weise vom Oszillationsantrieb gelöst bzw. am Oszillationsantrieb befestigt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: einen Oszillationsantrieb mit einem Tiefenanschlag;
- Fig. 2: die Halteeinrichtung mit einem eingesetzten Abstandshalter des Tiefenanschlags gemäß Fig. 1;
- Fig. 3: das Befestigungsteil des Tiefenanschlags gemäß Fig. 1;
- Fig. 4: den Tiefenanschlag für einen Oszillationsantrieb gemäß Fig.1 ;
- Fig. 5: eine rückwärtige Ansicht des Tiefenanschlags aus Fig. 1;
- Fig. 6: einen Schnitt durch den Tiefenanschlag aus Fig. 5; und
- Fig. 7: den Oszillationsantrieb mit Tiefenanschlag gemäß Fig. 1 in einer Seitenansicht.

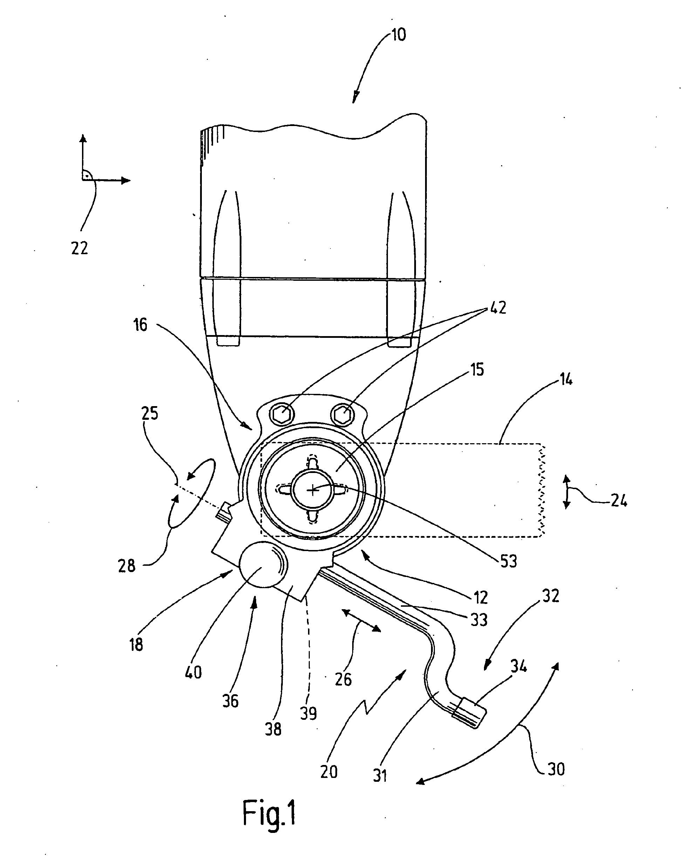

Fig. 1 zeigt einen Oszillationsantrieb 10 mit einem Tiefenanschlag 12, der eine Eindringtiefe eines Werkzeugs 14 des Oszillationsantriebs 10 begrenzt. Das Werkzeug 14 ist auf einer Abtriebswelle 15 angeordnet, die hier senkrecht zur Zeichenebene steht.

Die Abtriebswelle 15 wird im Betrieb des Oszillationsantriebs 10 in eine um eine Längsachse 53 der Abtriebswelle 15 hin und her oszillierende Drehbewegung versetzt. Das Werkzeug 14 bewegt sich so in einer Oszillationsebene 22 oszillierend hin und her.

Der Tiefenanschlag 12 weist ein Befestigungsteil 16, eine Halteeinrichtung 18 und einen Abstandshalter 20 auf. Das Befestigungsteil 16 ist im Wesentlichen parallel zur Oszillationsebene 22 des Oszillationsantriebs 10 bzw. des Werkzeugs 14 angeordnet. Die Oszillationsebene 22 ist hier mittels zweier Pfeile eines Koordinatensystems symbolisch dargestellt und entspricht hier der Zeichenebene.

Die Oszillationsrichtung des Werkzeugs 14 wird mittels des Doppelpfeils 24 angedeutet. Eine übliche Oszillationsfrequenz liegt im Bereich von etwa 5.000 bis 25.000 Oszillationen pro Minute und ein typischer Oszillationswinkel zwischen etwa 0,5° und 7°.

Der Abstandshalter 20 ist innerhalb der Halteeinrichtung 18 sowohl entlang einer Lagerungsachse 25 verschiebbar (Doppelpfeil 26) als auch um die Lagerungsachse 25 verdrehbar (Doppelpfeil 28) gehalten. Ferner ist der Abstandshalter 20 mit der Halteeinrichtung 18 drehbar (Doppelpfeil 30) zum Befestigungsteil 16 gelagert.

Ein gekrümmter Abschnitt 31 schließt sich an einen geradlinigen Abschnitt 33 des Abstandshalters 20 an und ist nicht rotationssymmetrisch zur Lagerungsachse 25 ausgeführt. Dieser Abschnitt 31 weist einen Kontaktbereich 32 auf, der beim Arbeitsvorgang mit einem Werkstück in Kontakt tritt, wenn die gewünschte Eindringtiefe erreicht ist und ein weiteres Eindringen des Werkzeugs 14 blockiert. Auf den Kontaktbereich 32 ist hier eine Schutzkappe 34 aus Kunststoff aufgesetzt.

Der Tiefenanschlag 12 weist ein Klemmmittel 36 auf, das der Fixierung des Abstandshalters 20 in der Halteeinrichtung 18 dient.

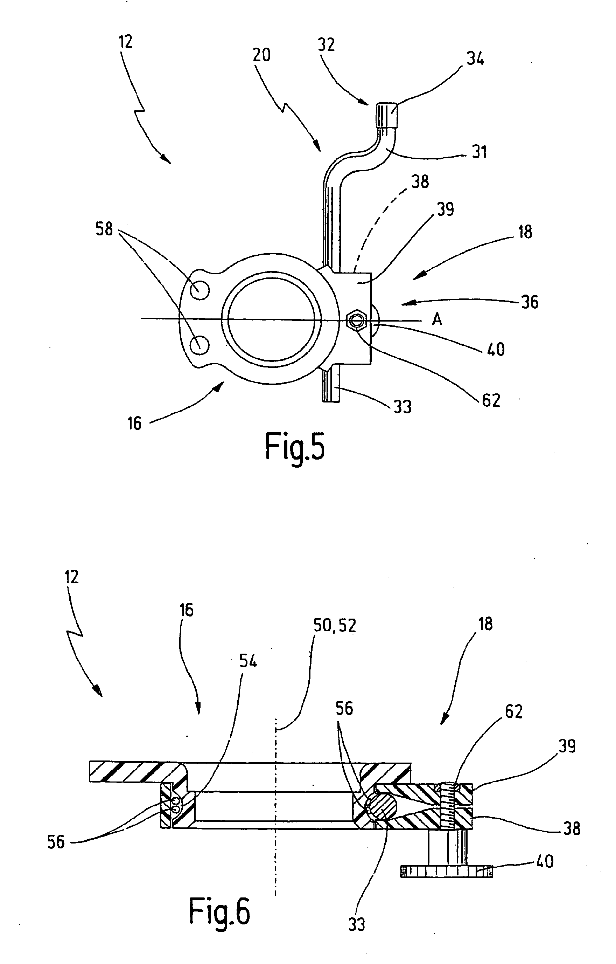

Das Klemmmittel 36 besteht hier aus einer oberen Klemmbacke 38 und einer unteren Klemmbacke 39 (die untere Klemmbacke 39 ist von der oberen Klemmbacke 38 verdeckt) und einer Spannschraube 40 mit einem Rändelrand, wobei die Spannschraube 40 in eine Mutter 62 (Fig. 5) an der unteren Klemmbacke 39 eingreift. Wird die Spannschraube 40 angezogen, so bewegen sich die Klemmbacken 38, 39 aufeinander zu und klemmen den Abstandshalter 20 fest. Wird die Spannschraube 40 gelöst, vergrößert sich der Abstand zwischen den Klemmbacken 38, 39 und der Abstandshalter 20 wird in seiner Halterung gelockert bzw. freigegeben.

Im hier gezeigten Ausführungsbeispiel ist das Befestigungsteil 16 mit zwei Schrauben 42 am Oszillationsantrieb 10 befestigt.

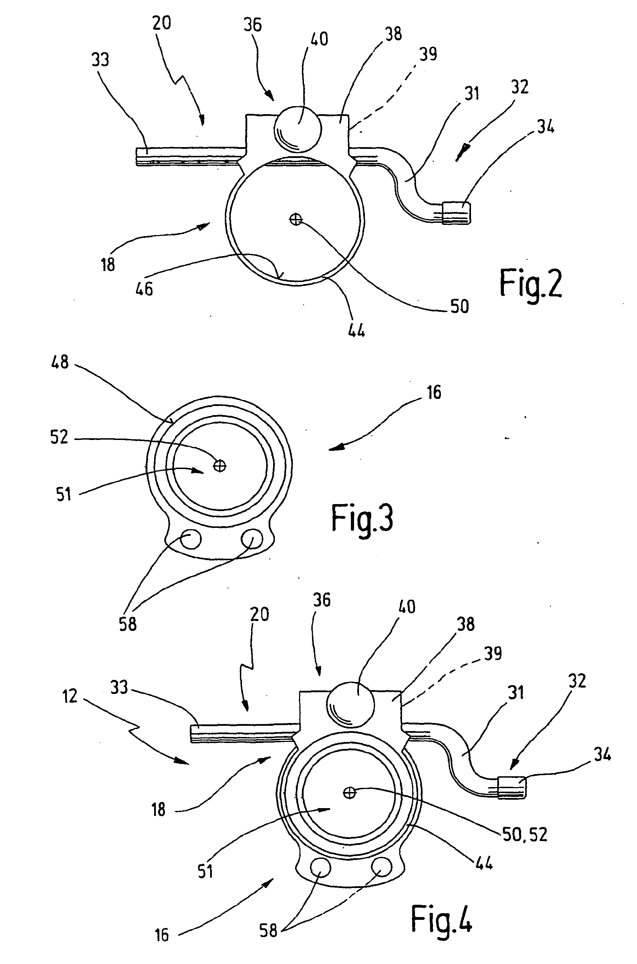

Anhand der Fig. 2, Fig. 3 und Fig. 4, die die Halteeinrichtung 18 mit dem Abstandshalter 20, das Befestigungsteil 16 und den Tiefenanschlag 12 zeigen, wird nun der Aufbau des Tiefenanschlags 12 genauer dargestellt.

Bei der Halteeinrichtung 18 ist ein ringförmiger Bereich 44 zu erkennen, dessen innerer Rand 46 mit einem äußeren Rand 48 des Befestigungsteils 16 zusammenwirkt.

Wird die Halteeinrichtung 18 auf das Befestigungsteil 16 aufgesetzt, so kann die Halteeinrichtung 18 relativ zum Befestigungsteil 16 gedreht werden. Dabei fällt die Drehachse 50 der Halteeinrichtung 18 mit der Mittelachse 52 des Befestigungsteils 16 - und mit der Längsachse 53 der Abtriebswelle 15, sofern der Tiefenanschlag 12 am Oszillationsantrieb 10 befestigt ist - zusammen. Wie in den Figuren angedeutet, stehen die Drehachse 50 und die Mittelachse 52 senkrecht zur Zeichenebene.

Schließlich sei auf die Ausnehmungen 58 hingewiesen, die eine Montage des Befestigungsteils 16 und damit des Tiefenanschlags 12 am Oszillationsantrieb 10 ermöglichen.

Fig. 4 zeigt die Vorderseite des Tiefenanschlags 12.

Fig. 5 zeigt den Tiefenanschlag 12 von der Rückseite. Hier ist nun die Mutter 62 zu erkennen, die in der Klemmbacke 39 eingesetzt ist. Die Spannschraube 40 greift in die Mutter 62 ein und kann so die klemmende Wirkung des Klemmmittels 36 bewirken. Zudem ist eine Schnittlinie A darstellt.

Fig. 6 zeigt die mit der Schnittlinie A korrespondierende Schnittansicht durch den Tiefenanschlag 12. Das Befestigungsteil 16 weist eine umlaufende Nut 54 auf. In der Nut 54 sind zwei elastische, ringförmige Elemente 56 eingelegt.

Wie in Fig. 2 zu erkennen ist, liegt ein Teil des Abstandshalters 20 im eingeschobenen Zustand im Inneren des ringförmigen Bereichs 44. In der Schnittansicht der Fig. 6 ist der Abstandshalter 20 in der Position dargestellt, wenn Befestigungsteil 16 und Halteeinrichtung 18 zusammengesetzt sind und der Abstandshalter 20 eingeschoben ist.

Es ist einerseits zu erkennen, dass der Abstandshalter in die Nut 54 eingreift. Dies verhindert, dass sich die Halteeinrichtung 18 vom Befestigungsteil 16 löst. Andererseits drückt der Abstandshalter 20 gegen einen Abschnitt der elastischen Elemente 56. Beim hier gezeigten Ausführungsbeispiel führt dies zu einer Deformation der elastischen Elemente 56.

Wenn der Abstandshalter 20 durch das Klemmmittel 36 fixiert ist, wird so einem versehentlichen Verdrehen der Halteeinrichtung 18 gegenüber dem Befestigungsteil 16 entgegengewirkt. Wird der Abstandshalter 20 aus der Halteeinrichtung 18 herausgezogen, kann die Halteeinrichtung 18 vom Befestigungsteil 16 gelöst werden.

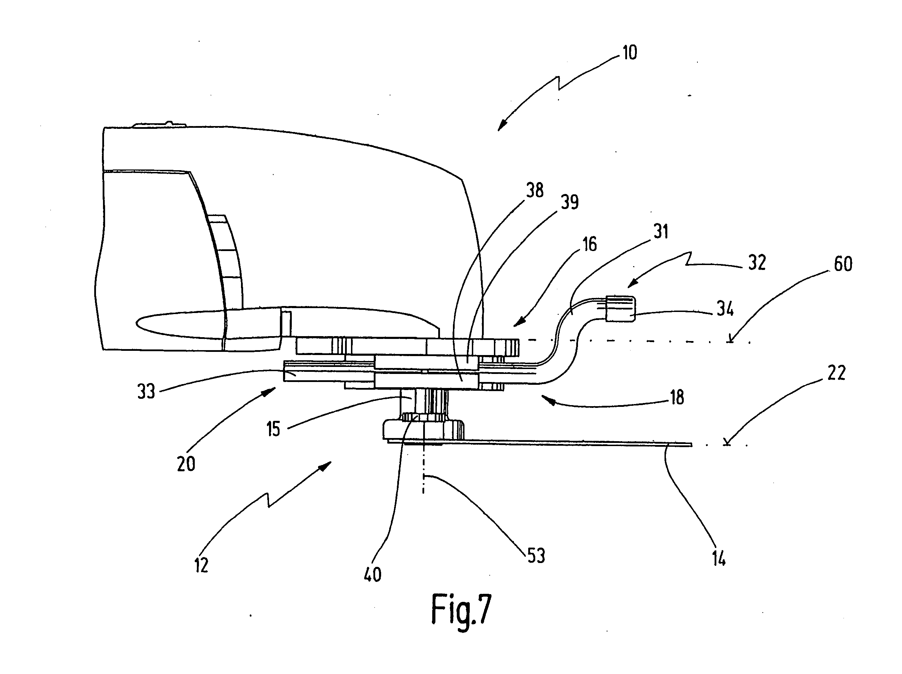

Fig. 7 zeigt schließlich den Oszillationsantrieb 10 mit dem Tiefenanschlag 12 in einer Seitenansicht. Dabei ist neben der Oszillationsebene 22 eine Montageebene 60 am Oszillationsantrieb 10 dargestellt. In dieser Montageebene 60 liegt eine Auflagefläche, an der das Befestigungsteil 16 im montierten Zustand am Oszillationsantrieb 10 anliegt.

Der Abstandshalter 20 ist dabei in der Halteeinrichtung 18 zwischen der Oszillationsebene 22 und der Montageebene 60 angeordnet. Hier verläuft der geradlinige Abschnitt 33 vollständig zwischen der Oszillationsebene 22 und der Montageebene 60. Der gekrümmte Abschnitt 31 kann durch ein Verdrehen des Abstandshalters 20 auch vollständig zwischen der Oszillationsebene 22 und der Montageebene 60 positioniert werden.

Der gezeigte Oszillationsantrieb 10 und der Tiefenanschlag 12 erlauben es mit einfachen und kostengünstigen Mitteln, die Eindringtiefe des Oszillationsantriebs 10 flexibel einzustellen.

## Patentansprüche

1. Oszillationsantrieb (10) mit einer drehoszillierend angetriebenen Abtriebswelle (15) zum Antrieb eines Werkzeugs (14), mit einem Tiefenanschlag (12) zur Begrenzung einer Eindringtiefe des Werkzeugs (14), wobei der Tiefenanschlag (12) ein Befestigungsteil (16) aufweist, das am Oszillationsantrieb (10) im Wesentlichen parallel zu einer Oszillationsebene (22) des Oszillationsantriebs (10) befestigt ist, und an dem Befestigungsteil (16) ein Abstandshalter (20) angeordnet ist, der relativ zum Befestigungsteil (16) entlang einer Lagerungsachse (25) verschiebbar ist, wobei der Abstandshalter (20) in einer am Tiefenanschlag (12) ausgebildeten Halteeinrichtung (18) um die Lagerungsachse (25) verdrehbar gehalten ist und wobei mindestens ein Abschnitt (31) des Abstandshalters (20) nicht rotationssymmetrisch zur Lagerungsachse (25) ausgeführt ist, **dadurch gekennzeichnet, dass** die Halteeinrichtung (18) drehbar oder verschwenkbar zum Befestigungsteil (16) gelagert ist.

2. Oszillationsantrieb (10) nach Anspruch 1, **dadurch gekennzeichnet, dass** das Befestigungsteil (16) eine zentrale Befestigungsöffnung mit einer Mittelachse (52) aufweist und eine Drehachse (50) der Halteeinrichtung (18) mit der Mittelachse (52) zusammenfällt.

3. Oszillationsantrieb (10) nach einem der Ansprüche 1 bis 2, **dadurch gekennzeichnet, dass** die Halteeinrichtung (18) ein Klemmmittel (36) zur Fixierung des Abstandshalters (20) in der Halteeinrichtung (18) aufweist.

4. Oszillationsantrieb (10) nach einem der Ansprüche 1 bis 3, **dadurch gekennzeichnet, dass** der Abstandshalter (20) in der Halteeinrichtung (18) derart gehalten ist, dass der Abstandshalter (20) in eine Nut (54) am Befestigungsteil (16) eingreift.

5. Oszillationsantrieb (10) nach Anspruch 4, **dadurch gekennzeichnet, dass** in der Nut (54) mindestens ein elastisches Element (56) angeordnet ist.

6. Oszillationsantrieb (10) nach einem der Ansprüche 1 bis 5, **dadurch gekennzeichnet, dass** eine Auflagefläche am Oszillationsantrieb (10), an der das Befestigungsteil (16) bei Befestigung am Oszillationsantrieb (10) anliegt, eine Montageebene (60).festlegt und dass der Abstandshalter (20) zwischen der Oszillationsebene (22) und der Montageebene (60) angeordnet ist.

7. Oszillationsantrieb (10) nach einem oder Ansprüche 1 bis 6, **dadurch gekennzeichnet, dass** der Abstandshalter (20) als Stab mit einem geradlinigen Abschnitt (33) und vorzugsweise mit einem gekrümmten Abschnitt (31) ausgeführt ist.

8. Oszillationsantrieb (10) nach einem der Ansprüche 1 bis 7, **dadurch gekennzeichnet, dass** das Befestigungsteil (16) mittels einer Schraub- und/oder Klemmverbindung am Oszillationsantrieb (10) befestigt ist.

## Claims

1. Oscillatory drive (10) comprising a rotatingly oscillatingly driven drive shaft (15) for driving a tool (14), a depth stop (12) for limiting the penetration depth of the tool (14), wherein the depth stop (12) comprises a securing element (16) which is secured to the oscillatory drive (10) substantially parallel to an oscillating plane (22) of the oscillatory drive (10), and wherein on the securing element (16) a spacer (20) is arranged which is slideable relative to the securing element (16) along a bearing axis (25), wherein the spacer (20) is held rotatably about the bearing axis (25) secured in a holding device (18) arranged on the depth stop (12), and wherein at least one section (31) of the spacer (20) is configured non-rotationally symmetrical to the bearing axis (25), **characterized in that** the holding device (18) is held rotatably and pivotably with respect to the securing device (16).

2. The oscillatory drive (10) according to claim 1, **characterized in that** the securing element (16) comprises a central securing opening having a central axis (52), and wherein an axis of rotation (50) of the holding device (18) is coincident with the central axis (52).

3. The oscillatory drive (10) according to any of claims 1 to 2, **characterized in that** the holding device (18) comprises a clamping element (36) for securing the spacer (20) on the holding device (18).

4. The oscillatory drive (10) according to any of claims 1 to 3, **characterized in that** the spacer (20) is held on the holding device (18) so that the spacer (20) engages within a groove (54) provided on the securing device (16).

5. The oscillatory drive (10) according to claim 4, **characterized in that** at least one elastic element (56) is arranged within the groove (54).

6. The oscillatory drive (10) according to any of claims 1 to 5, **characterized in that** a supporting surface on the oscillatory drive (10) against which the securing element (16) rests when fixed on the oscillatory drive (10), the supporting surface further defining a mounting plane (60), and **in that** the spacer (20) is arranged between the oscillatory plane (22) and the mounting plane (60).

7. The oscillatory drive (10) according to any of claims 1 to 6, **characterized in that** the spacer (20) is configured as a rod having a straight section (33) and preferably a curved section (31).

8. The oscillatory drive (10) according to any of claims 1 to 7, **characterized in that** the securing device (16) is secured to the oscillatory drive (10) by means of a screw connection and/or a clamping connection.

## Revendications

1. Entraînement oscillant (10) avec un arbre d'entraînement (15) entraîné en oscillations rotatoires et destiné à entraîner un outil (14), avec une butée de profondeur (12) pour limiter une profondeur de pénétration de l'outil (14), la butée de profondeur (12) présentant une partie de fixation (16) qui est fixée sur l'entraînement oscillant (10) pour l'essentiel parallèlement à un plan d'oscillation (22) de l'entraînement oscillant (10), et un organe d'écartement (20) étant placé sur la partie de fixation (16), organe qui peut être déplacé par rapport à la partie de fixation (16) le long d'un axe de montage (25), l'organe d'écartement (20) étant tenu rotatif autour de l'axe de montage (25) dans un dispositif de maintien (18) réalisé sur la butée de profondeur (12) et au moins une section (31) de l'organe d'écartement (20) étant réalisée non symétrique par rotation autour de l'axe de montage (25), **caractérisé en ce que** le dispositif de maintien (18) est monté rotatif ou pivotant par rapport à la partie de fixation (16).

2. Entraînement oscillant (10) selon la revendication 1, **caractérisé en ce que** la partie de fixation (16) présente une ouverture centrale de fixation avec un axe médian (52) et un axe de rotation (50) du dispositif de maintien (18) coïncidant avec l'axe médian (52).

3. Entraînement oscillant (10) selon l'une des revendications 1 à 2, **caractérisé en ce que** le dispositif de maintien (18) présente un moyen de blocage (36) pour fixer l'organe d'écartement (20) dans le dispositif de maintien (18).

4. Entraînement oscillant (10) selon l'une des revendications 1 à 2, **caractérisé en ce que** l'organe d'écartement (20) est tenu dans le dispositif de maintien (18) de telle manière que l'organe d'écartement (20) s'engage dans une rainure (54) présente sur la partie de fixation (16).

5. Entraînement oscillant (10) selon la revendication 4, **caractérisé en ce qu'**au moins un élément élastique (56) est placé dans la rainure (54).

6. Entraînement oscillant (10) selon l'une des revendications 1 à 5, **caractérisé en ce qu'**une surface d'appui sur l'entraînement oscillant (10), sur laquelle la partie de fixation (16) s'appuie en cas de fixation sur l'entraînement oscillant (10), définit un plan de montage, et **en ce que** l'organe d'écartement (20) est placé entre le plan d'oscillation (22) et le plan de montage (60).

7. Entraînement oscillant (10) selon l'une des revendications 1 à 6, **caractérisé en ce que** l'organe d'écartement (20) est conformé en barreau avec une section rectiligne (33) et de préférence avec une section incurvée (31).

8. Entraînement oscillant (10) selon l'une des revendications 1 à 7, **caractérisé en ce que** la partie de fixation (16) est fixée à l'entraînement oscillant (10) au moyen d'une liaison vissée et/ou coincée.
